# EUROPEAN PATENT APPLICATION

(11) **EP 1 030 294 A2**
(43) Date of publication of application: **23.08.2000**
(21) Application number: 99114944.4
(22) Date of filing: 30.07.1999
(51) Int. Cl.: G11B 7/125

(54) **Optical information memory apparatus and optical head**

(30) Priority: 19.02.1999 JP 4175599
(71) Applicant: FUJITSU LIMITED, Kawasaki-shi, Kanagawa 211-8588 (JP)
(72) Inventor: Aoyama, Nobuhide, c/o Fujitsu Limited, Kawasaki-shi, Kanagawa 211-8588 (JP); Yoshikawa, Hiroyasu, c/o Fujitsu Limited, Kawasaki-shi, Kanagawa 211-8588 (JP); Hasegawa, Shinya, c/o Fujitsu Limited, Kawasaki-shi, Kanagawa 211-8588 (JP)
(74) Representative: Körfer, Thomas, Dipl.-Phys.

(57) **Abstract**

Each of an optical information memory apparatus and an optical head has a collimator for collimating beams of light emitted from a semiconductor laser (10) to form a parallel luminous flux (la), and control mechanism for controlling the collimator (20) to control a parallelism of the parallel luminous flux (la) formed by the collimator (20).

## Description

### BACKGROUND OF THE INVENTION

### Field of the Invention

The present invention relates to an optical information memory apparatus wherein light is applied to a predetermined storage medium so that an access of information to the storage medium is performed, and an optical head for focussing light.

### Description of the Prior Art

Hitherto, there is known, as a storage medium for storing voice information, character information, image information and the like, an optical disk such as CD, CD-ROM, CD-R, DVD, PD, MO. Further, there is known an optical information memory apparatus having access to those optical disks. The optical information memory apparatus has access to an optical disk by means of condensing beams of irradiation light onto the optical disk by an objective lens. The recording density of information recording for the optical disk depends on a spot size of the irradiation light on the storage medium. When a wavelength of the irradiation light is denoted by λ and a numerical aperture of the objective lens is denoted by NA, the spot size of the irradiation light depends on the diffraction limit λ/NA of light. Thus, in order to implement a high density of information recording for an optical disk, a development of a shortwave laser and a study of implementing a higher NA for an objective lens are energetically performed. As a method of implementing the higher NA for an objective lens, there is known a method of implementing an objective lens wherein the numerical aperture NA is 1.4 or so by means of condensing beams of light in a medium which is high in refractive index, such as an immersion lens of an optical microscope.

However, according to an optical system of the conventional optical information memory apparatus, an optical disk and an objective lens are spaced from one another with a great gap, and the gap is filled with air. Thus, of a light beam incident onto the objective lens, part exceeding 1 in NA will be subjected to the total reflection inside the objective lens, in the usual condition. As a result, it is difficult to implement a high NA as in the immersion objective lens. On the other hand, recently, there is proposed a technology in which of a light beam incident onto the objective lens, part exceeding 1 in NA is irradiated onto the optical disk in the form of an evanescent wave or a tunneling light from an edge of the objective lens. Particularly, with the advance of technology of a length control of a nanometer-order, as seen in a control of a floating amount in a slider of the recent hard disk, there is actively made a study of an optical information memory apparatus using an objective lens of high NA including a solid immersion lens (hereinafter referred to as SIL) and a converging lens, as disclosed in Japanese Patent Application Laid Open Gazette No. Hei.5-189796. When such an objective lens of high NA is loaded onto a floating type of slider or a sliding type of slider so that an interval between the objective lens and an optical disk storage medium is controlled, it is possible to implement high density of information storage and information reproducing.

However, the objective lens including the SIL is concerned with the high NA. Accordingly, for the objective lens, there is required a severe precision in processing of thickness of the SIL and mounting of the SIL and the converging lens. Thus, it is difficult in mass production for the objective lens. According to an optical system of the conventional optical memory apparatus, a focussing of an irradiation light onto a storage medium is performed by means of moving the objective lens in a direction perpendicular to a surface of the optical disk. However, in the objective lens including the SIL formed in a united body, it happens that a focussing position of light enters inside the SIL owing to a wave aberration caused by an error in thickness of the SIL and/or an error in mounting of the SIL. This case is associated with a problem that it is difficult to implement a focussing through a movement of the objective lens. Further, in the event that the objective lens and the like are loaded onto a slider, an operating length of the lens is very small. This makes it difficult to establish a focussing in a case where a focussing position of light enters deeply inside the storage medium owing to the wave aberration. Further, when the objective lens including the SIL is formed in a united body, it may be associated with a problem that it is difficult to correct the wave aberration due to a wavelength variation of a light source.

In order to suppress the wave aberration, there is considered a method of controlling the respective positions of the SIL and the converging lens individually by actuators. However, the control of the respective positions of the SIL and the converging lens is very difficult. Further, in order to control a length between the SIL and the storage medium in the order of nanometer, it is considered that the objective lens is loaded onto the floating type of slider or the sliding type of slider. However, in this case, there is a need that the objective lens is small and light. Thus, a great contrivance is needed to mount actuators on the objective lens.

### SUMMARY OF THE INVENTION

In view of the foregoing, it is an object of the present invention to provide an optical information memory apparatus capable of readily correcting the wave aberration as mentioned above, and an optical head associated with the optical information memory apparatus.

To achieve the above-mentioned objects, the present invention provides an optical information memory apparatus wherein light is applied to a predetermined storage medium so that an access of information to the storage medium is performed, said optical information memory apparatus comprising:
a light source for emitting a light beam;
a transmission unit for transmitting the light beam emitted from said light source;
a condensing unit for condensing the light beam transmitted by said transmission unit to focus on the storage medium; and
a divergence and convergence degree control mechanism for controlling said transmission unit to control a degree of divergence and convergence of the beams of light transmitted by said transmission unit.

In the optical information memory apparatus as mentioned above, it is preferable that said transmission unit includes a collimator for collimating the light beam emitted from said light source to form a parallel luminous flux, and said divergence and convergence degree control mechanism is a parallelism control mechanism for controlling said collimator to control a parallelism of the parallel luminous flux formed by said collimator.

According to the optical information memory apparatus of the present invention, a degree of divergence and convergence of luminous flux and the like is controlled by the divergence and convergence degree control mechanism and the parallelism control mechanism, and thereby readily correcting the wave aberration. Accordingly, it is possible to implement a small spot size and thus perform high density of information recording and information reproducing.

In the optical information memory apparatus as mentioned above, it is preferable that said collimator comprises a plurality of lenses through which the light beam emitted from said light source sequentially pass, and said parallelism control mechanism moves anyone of the plurality of lenses in parallel with respect to an optical axis.

In the optical information memory apparatus as mentioned above, it is preferable that said collimator comprises a collimating unit for collimating the light beam emitted from said light source to temporarily form a parallel luminous flux; a first conversion lens for converting the parallel luminous flux temporarily formed by said collimating unit to divergent pencil of rays or converged luminous flux; and a second conversion lens for reversing the divergent pencil of rays or the converged luminous flux, which are converted by said first conversion lens from the parallel luminous flux, to the parallel luminous flux, and
said parallelism control mechanism moves anyone of said first conversion lens and said second conversion lens in parallel with respect to an optical axis.

According to the optical information memory apparatus having those preferable arrangements, a parallelism of the parallel luminous flux is readily controlled through moving a lens in parallel with respect to an optical axis by the parallelism control mechanism.

In the optical information memory apparatus as mentioned above, it is preferable that said light source emits divergent light, said collimator is a collimating lens for collimating the divergent light emitted from said light source, and said parallelism control mechanism moves said collimating lens in parallel with respect to an optical axis.

According to the above-mentioned optical information memory apparatus, it is possible to contribute to a miniaturization of the memory apparatus.

Further, in the optical information memory apparatus as mentioned above, it is preferable that said optical information memory apparatus further comprises a traveling direction control mechanism for controlling said collimator to control a traveling direction of the parallel luminous flux formed by said collimator.

The use of the traveling direction control mechanism makes it possible to control a position of focussing of light by the condensing unit.

In the optical information memory apparatus having such a traveling direction control mechanism, it is preferable that said collimator comprises a plurality of lenses through which the light beam emitted from said light source sequentially pass, and said traveling direction control mechanism moves anyone of the plurality of lenses vertically with respect to an optical axis.

Further, it is preferable that said collimator comprises a collimating unit for collimating the light beam emitted from said light source to temporarily form a parallel luminous flux; a first conversion lens for converting the parallel luminous flux temporarily formed by said collimating unit to divergent pencil of rays or converged luminous flux; and a second conversion lens for reversing the divergent pencil of rays or the converged luminous flux, which are converted by said first conversion lens from the parallel luminous flux, to the parallel luminous flux, and
said traveling direction control mechanism moves anyone of said first conversion lens and said second conversion lens vertically with respect to an optical axis.

According to the optical information memory apparatus as mentioned above, it is possible to readily control a traveling direction of the luminous flux through moving a lens vertically with respect to an optical axis by the traveling direction control mechanism.

In the optical information memory apparatus as mentioned above, it is preferable that said collimator has a reflection member for reflecting a parallel luminous flux on a plane, and said traveling direction control mechanism rotates said reflection member so that a direction of reflection of the parallel luminous flux is varied.

According to the optical information memory apparatus as mentioned above, it is possible to readily control a traveling direction of the luminous flux through rotating the reflection member by the traveling direction control mechanism.

In the optical information memory apparatus as mentioned above, it is preferable that said condensing unit includes a solid immersion lens.

In the optical information memory apparatus as mentioned above, it is preferable that said condensing unit includes a solid immersion lens having a hyper-hemisphere.

According to the optical information memory apparatus as mentioned above, it is possible to form a small spot by the solid immersion lens, and thereby performing a high density of information recording and information reproducing.

In the optical information memory apparatus as mentioned above, it is preferable that said optical information memory apparatus further comprises: a focussing error detecting unit for detecting a focussing error in said condensing unit using light reflected by the storage medium; and a focus control unit for focussing on the storage medium by said condensing unit through a feedback of a detection result by said focussing error detecting unit to said parallelism control mechanism.

According to the optical information memory apparatus having the focus control unit, a detection result of the focussing error detecting is fedback to said parallelism control mechanism to focus on the storage medium.

Further, in the optical information memory apparatus as mentioned above, it is preferable that said storage medium has a concentric or spiral track for storing information, said optical information memory apparatus further comprises:
a tracking error detecting unit for detecting a misregistration between a focus position of light by said condensing unit and a position of said track; and
a tracking control unit for providing a coincidence between the focus position of light by said condensing unit and the position of said track through a feedback of a detection result by said tracking error detecting unit to said traveling direction control mechanism.

And it is preferable that said storage medium is formed with emboss pits along said track, and said tracking error detecting unit detects the misregistration between the focus position and the position of said track in accordance with a sample servo system.

According to the optical information memory apparatus having such a tracking control unit, a detection result of the misregistration of the focus position is fedback to the traveling direction control mechanism to regulate the focus position, and thereby reliably accessing a desired position on the storage medium.

In the optical information memory apparatus as mentioned above, it is preferable that said optical information memory apparatus further comprises a slider on which said condensing unit is fixed, said slider moving along a surface of the storage medium in a state that the slider rises above the surface of the storage medium or the slider is in contact with the surface of the storage medium.

And it is preferable that said optical information memory apparatus further comprises a slider movement unit for moving said slider to a desired position of the surface of the storage medium in a state that a relative position of said light source, said condensing unit, and an optical system for guiding light emitted from said light source to said condensing unit is fixed.

According to the optical information memory apparatus having such a slider, it is possible to maintain the interval between the condensing unit and a surface of the storage medium to be constant. Further, according to the optical information memory apparatus having such a slider movement unit, an optical path for light from the light source to the condensing unit is fixed. Thus, it is possible to reliably correct the above-mentioned wave aberration.

To achieve the above-mentioned objects, the present invention provides an optical head comprising:
a light source for emitting a light beam;
a transmission unit for transmitting the light beam emitted from said light source;
a condensing unit for condensing the light beam transmitted by said transmission unit to focus; and
a divergence and convergence degree control mechanism for controlling said transmission unit to control a degree of divergence and convergence of the light beam transmitted by said transmission unit.

In the optical head as mentioned above, it is preferable that said transmission unit includes a collimator for collimating the light beam emitted from said light source to form a parallel luminous flux, and said divergence and convergence degree control mechanism is a parallelism control mechanism for controlling said collimator to control a parallelism of the parallel luminous flux formed by said collimator.

According to the optical head of the present invention, a degree of divergence and convergence of luminous flux and the like is controlled by the divergence and convergence degree control mechanism and the parallelism control mechanism, and thereby readily correcting the wave aberration. Accordingly, it is possible to implement a microscopic condensed spot.

### BRIEF DESCRIPTION OF THE DRAWINGS

Fig. 1 is a conceptual view showing a comparative example using a hemisphere of SIL.

Fig. 2 is a conceptual view showing a comparative example using a hyper-hemisphere of SIL.

Fig. 3 is an illustration showing a state that an objective lens including an SIL is loaded on a slider.

Fig. 4 is a graph showing a wave aberration due to an arrangement misregistration ΔZ in an optical axis direction.

Fig. 5 is a graph showing a wave aberration due to an arrangement misregistration ΔX within an X-Y plane.

Fig. 6 is a graph showing a wave aberration due to a thickness error Δd.

Fig. 7 is a view of part of an optical system according to a first embodiment of the present invention.

Fig. 8 is a graph showing a result corrected in a wave aberration due to an arrangement misregistration ΔZ in an optical axis direction.

Fig. 9 is a graph showing a result corrected in a wave aberration due to an arrangement misregistration ΔX within an X-Y plane.

Fig. 10 is a graph showing a result corrected in a wave aberration due to a thickness error Δd.

Fig. 11 is a perspective view of a collimator, etc. disposed on a swing arm.

Fig. 12 is an illustration showing an example of a track formed on a storage medium.

Fig. 13 is an explanatory view useful for understanding a tracking of a sample servo system.

Fig. 14 is a construction view of a focus control system and a tracking control system according to the first embodiment of the present invention.

Fig. 15 is a view showing the second embodiment of the present invention.

Fig. 16 is a view showing the third embodiment of the present invention.

Fig. 17 is an view showing an example of a reflection type of SIL.

### DETAILED DESCRIPTION OF PREFERRED EMBODIMENTS

Before dealing with embodiments of the present invention, there will be described comparative examples, and the problems.

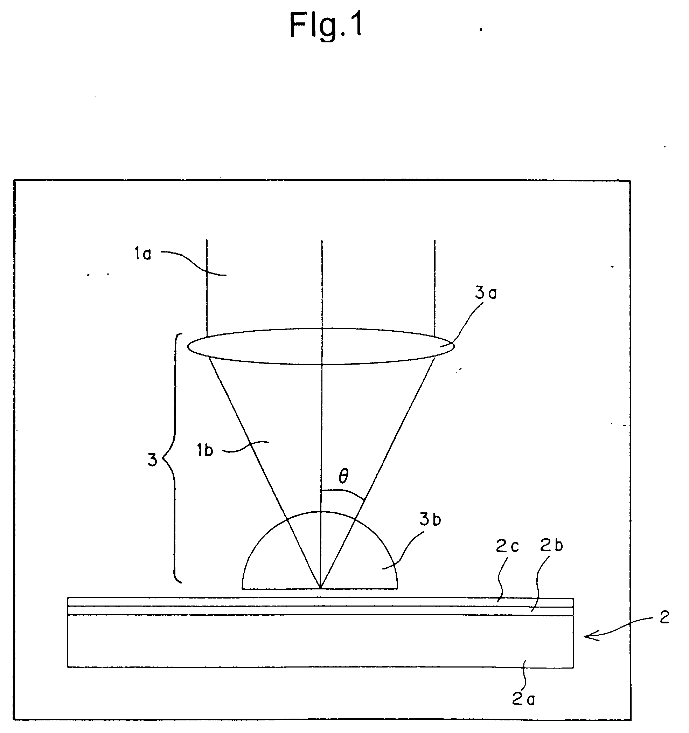

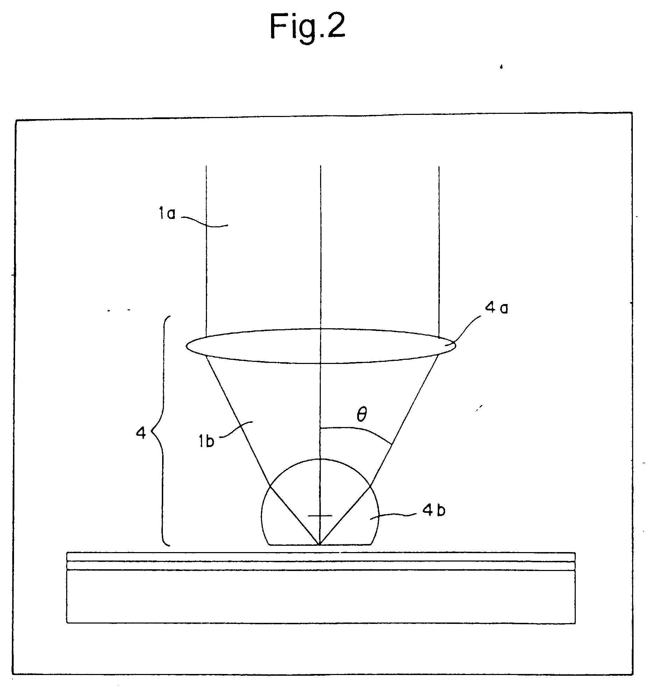

Fig. 1 is a conceptual view showing a comparative example using a hemisphere of SIL. Fig. 2 is a conceptual view showing a comparative example using a hyper-hemisphere of SIL. In Figs. 1 and 2, there are shown only an objective lens and its environs of an optical information memory apparatus.

Fig. 1 shows an objective lens 3 for focussing a parallel luminous flux 1a on a storage medium 2. The objective lens 3 comprises a converging lens 3a and a hemisphere of SIL 3b. The parallel luminous flux 1a is refracted by the converging lens 3a into a converged luminous flux 1b. The converged luminous flux 1b is incident onto the SIL 3b without refraction on a hemisphere surface of the SIL 3b, and is focussed on a plane of the SIL 3b. The SIL 3b is held at position very close to the storage medium 2 so that an evanescent wave and the like of the focussed light is applied to the storage medium 2. Thus, the light is substantially focussed on the storage medium 2. The storage medium 2 comprises a substrate 2a, a storage layer 2b for storing information, and a protecting film 2c for protecting the storage layer 2b. An access to the storage medium 2 is performed by an application of light to the storage layer 2b. A method of an access to the storage medium 2 is a technology which is well known. Thus, the redundant description will be omitted.

When the conical angle of the converged luminous flux 1b converted by the converging lens 3a from the parallel luminous flux 1a is expressed by 2θ, the numerical number of the converging lens 3a is given by sin θ. When the refractive index of the converging lens 3b is expressed by n, the numerical aperture of the objective lens 3 in its entirety is given by NA = n · sinθ. Thus, preparation of the SIL 3b with a material which is sufficiently high in refractive index makes it possible to implement the numerical aperture exceeding 1 as a whole of the objective lens 3.

Fig. 2 shows an objective lens 4 which comprises a converging lens 4a similar to Fig. 1 and a hyper-hemisphere of SIL 4b. The parallel luminous flux 1a is refracted by the converging lens 4a into a converged luminous flux 1b. The converged luminous flux 1b is refracted on a hyper-hemisphere surface of the SIL 4b, and is incident onto the SIL 4b, and finally is focussed on a plane of the SIL 4b.

When the conical angle of the converged luminous flux 1b converted by the converging lens 4a from the parallel luminous flux 1a is expressed by 2θ, the numerical number of the converging lens 4a is given by sin θ. When the refractive index of the converging lens 4b is expressed by n, the numerical aperture of the objective lens 4 in its entirety is given by NA =n · n · sinθ . Thus, preparation of the SIL 4b with a material which is sufficiently high in refractive index makes it possible to implement the objective lens 4 having the numerical aperture exceeding 1.

The objective lenses 3 and 4 are loaded on a slider moving along a surface of a storage medium. The slider serves to hold the SIL 3b and SIL 4b at a position close to the storage medium. As a slider on which objective lenses 3 and 4 are loaded, there are known a sliding type of slider sliding on a surface of a storage medium, and a floating type of slider moving in a state that it rises above a storage medium.

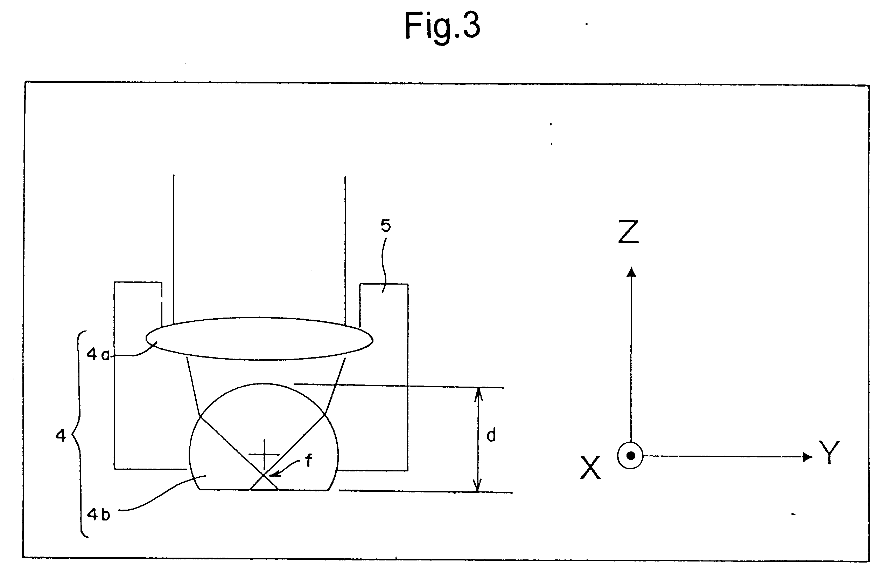

Fig. 3 is an illustration showing a state that an objective lens including an SIL is loaded on a slider.

In Fig. 3, as an example of an objective lens, there is shown the objective lens 4 shown in Fig. 2, and as an example of a slider, there is shown a floating type of slider 5.

Here, as shown in Fig. 3, there is provided a definition that an optical axis direction (a vertical direction with respect to the figure) of the objective lens 4 is expressed by a Z direction, a plane perpendicular to the Z direction: an X-Y plane, and a thickness of the SIL 4b: d.

Processing of the SIL 4b involves a thickness error Δd on the SIL 4b. An attachment of the converging lens 4a and the SIL 4b on the slider 5 involves a misregistration ΔZ in the optical axis direction, and a misregistration ΔX within the X-Y plane, with respect to a relative disposition between the converging lens 4a and the SIL 4b. These errors cause a wave aberration in which a wave surface of a luminous flux is distorted.

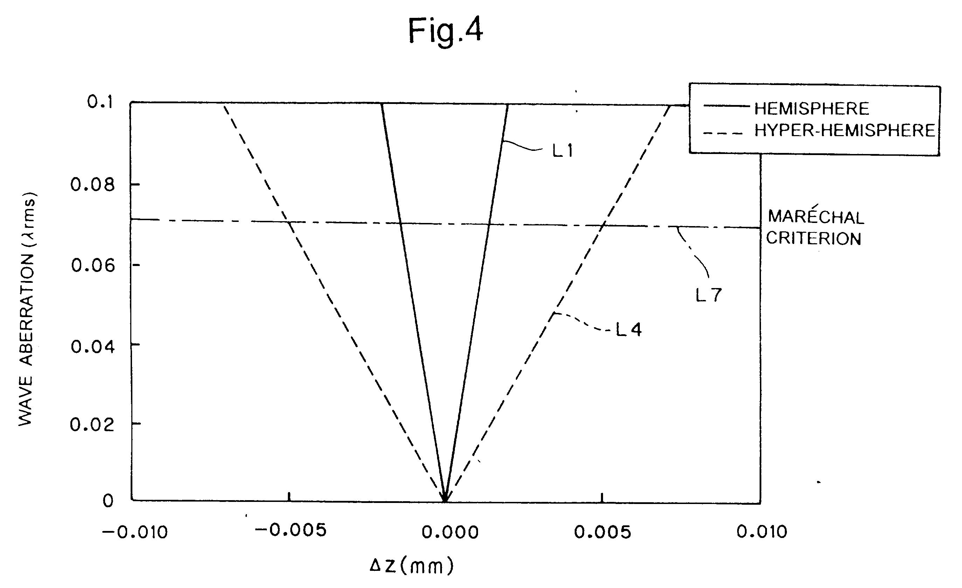

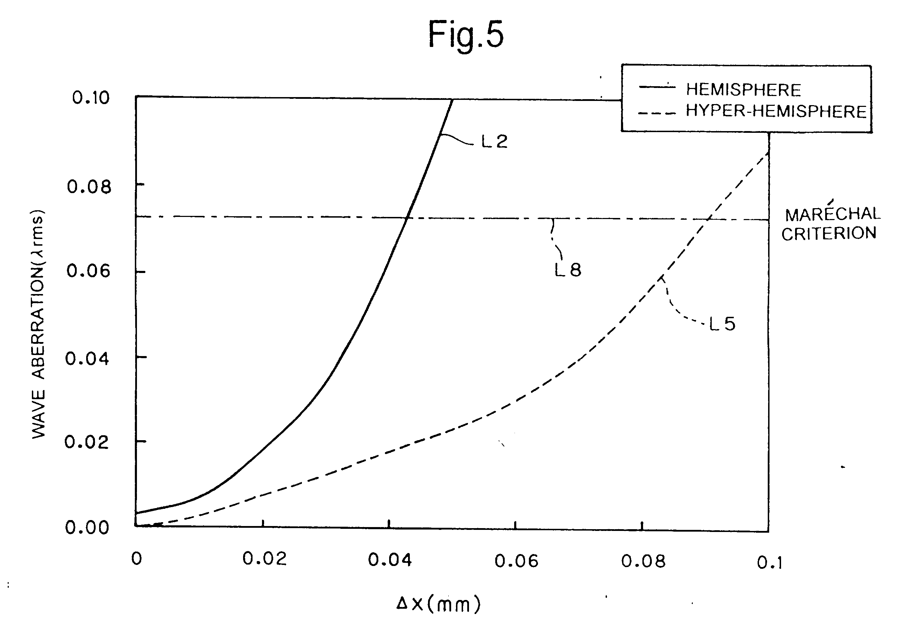

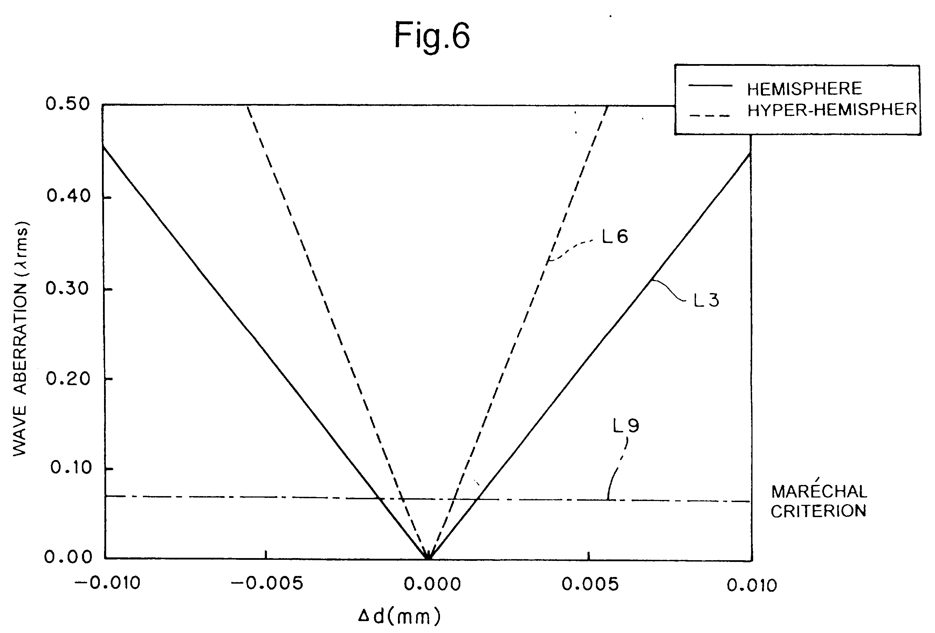

Fig. 4 is a graph showing a wave aberration due to an arrangement misregistration ΔZ in an optical axis direction. Fig. 5 is a graph showing a wave aberration due to an arrangement misregistration ΔX within an X-Y plane. Fig. 6 is a graph showing a wave aberration due to a thickness error Δd.

A vertical axis of the graph of each of Figs. 4, 5 and 6 shows, in the event that a parallel luminous flux shown in Figs. 1 and 2 is deemed to be a flux of a large number of rays, a state of unevenness of waves of light when the large number of rays reach a designed condensing position of the objective lens, in the form of a dispersion normalized with a wavelength of light. The state of unevenness of waves of light corresponds to a wave aberration.

In Figs. 4, 5 and 6, graphs involved in a case where the objective lens 3 including the hemisphere of SIL 3b shown in Fig. 1 is used are shown with linear lines L1, L2 and L3. And graphs involved in a case where the objective lens 4 including the hyper-hemisphere of SIL 4b shown in Fig. 2 is used are shown with broken lines L4, L5 and L6. Further, in Figs. 4, 5 and 6, Maréchal criterion, which is a criterion of an amount of wave aberration for obtaining a sufficiently small irradiation beam spot diameter, is shown with dashed lines L7, L8 and L9.

Figs. 4 and 6 show linear graphs. From the graphs, it would be understood that when the misregistration ΔZ and the thickness error Δd exceed several µm, an amount of wave aberration exceeds Maréchal criterion. Fig. 5 shows a curved graph. From the graph, it would be understood that when the misregistration ΔX exceeds several tens of µm, an amount of wave aberration exceeds Maréchal criterion. In other words, as the precision of processing for the SIL and the precision of mounting the converging lens and the like, a high precision of order of several µm or less or several tens of µm or less is required, and thus, it is difficult in mass production for the objective lens. Further, in the event that such a high precision cannot be satisfied, a recording density is lowered because of a large spot diameter, or alternatively, as shown in Fig. 3, a focal point f enters the SIL4b and it is difficult to focus irradiation light on a storage medium.

By loading onto the slider 5 shown in Fig. 3 an actuator for controlling a position of the converging lens 4a and the SIL 4b, it is theoretically possible to correct the wave aberration. However, indeed, it is difficult to implement a positional control by the actuator. In order that the SIL 4b is held close to the storage medium, there is a need that the slider 5 is small and light. Thus, a great contrivance is needed to mount actuators on the slider 5.

In view of the foregoing, hereinafter, there will be explained embodiments of the present invention. First, there will be explained a first embodiment of an optical information memory apparatus according to the present invention.

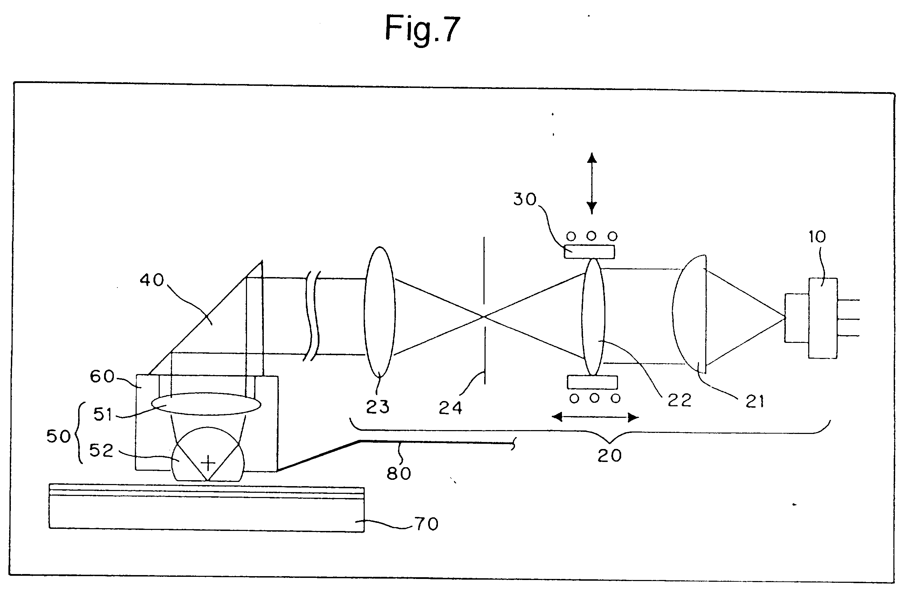

Fig. 7 is a view of part of an optical system according to a first embodiment of the present invention.

A semiconductor laser 10 emits laser beams. A collimator 20 comprises: a collimating lens 21 for collimating divergent pencil of rays emitted from the semiconductor laser 10 into a parallel luminous flux, said collimating lens 21 being an example of the collimating unit referred to in the present invention; a first conversion lens 22 for converting the parallel luminous flux to a converged luminous flux to focus once; a second conversion lens 23 for reversing divergent pencil of rays, which are formed after the converged luminous flux is focused once, to a parallel luminous flux; and an aperture 24 for removing stray light, said aperture being disposed at a position wherein the converged luminous flux is focused once. The collimator 20 is an example of the collimator referred to in the present invention, and the collimator referred to in the present invention is not restricted to the collimator 20. The aperture 24 suppresses the wave aberration by removing the stray light. It is noted that the aperture 24 is not one indispensable for the collimator referred to in the present invention.

An actuator 30, which is an example of the parallelism control mechanism and the traveling direction control mechanism referred to in the present invention, drives the first conversion lens 22 in the direction parallel with respect to the optical axis and in the direction perpendicular to the optical axis. This is applicable also to driving of the second conversion lens 23. As a method of driving the first conversion lens 22 and the second conversion lens 23, there is considered a manual control by a micrometer other than an actuator using a voice coil. However, here, the actuator is adopted. As the parallelism control mechanism referred to in the present invention it is acceptable to use one for moving the collimating lens 21 in the optical axis direction.

In Fig. 7, there are shown a reflecting prism 40 and a floating type of slider 60 on which an objective lens 50 is loaded. The objective lens 50, which is an example of the condensing unit referred to in the present invention, comprises a converging lens 51 and an SIL 52. As described regarding Fig. 3, as a slider, there is considered two types of slider, that is, a floating type of slider and a sliding type of slider. In Fig. 7, there is shown a floating type of slider 60 by way of example. According to the floating type of slider 60, it is possible to control a length between the SIL 52 and a storage medium 70 in the order of nanometer at the relative velocity with respect to the storage medium 70. Consequently, an irradiation light condensed on a plane of the SIL 52 is applied onto the storage medium 70 maintaining a microscopic spot. In other words, in case of an arrangement shown in Fig. 7, focusing beam of light on the plane of the SIL 52 is equivalent to focussing the beam of light on the storage medium 70. Also, in case of the sliding type of slider, by shifting a sliding edge contacting with the storage medium from the plane of the SIL by several nanometers, it is possible to form a microscopic spot on the storage medium.

The parallel luminous flux prepared by the collimator 20 is reflected by the reflecting prism 40 and is incident onto the converging lens 51 so that it is refracted into a converged light. The converged light by the converging lens 51 is further refracted by the SIL 52 and is condensed on the storage medium 70. The reflecting prism 40, the converging lens 51 and the SIL 52 are fixed on the slider 60. This arrangement may involve an interval error between the converging lens 51 and the SIL 52, an arrangement error in the direction perpendicular to the optical axis, and a thickness error as to the hyper-hemisphere of SIL 52, which cause the wave aberration as shown in Figs. 4, 5 and 6. As will be described, the wave aberration may be suppressed by means of moving the first conversion lens 22 in the direction parallel to the optical axis by the actuator 30 so that the parallelism of the parallel luminous flux produced by the collimator 20 is controlled in such a manner that the parallel luminous flux is changed to somewhat converged luminous flux or divergent pencil of rays.

Table 1 shows an example of a specification for the objective lens 50. While Fig. 7 shows a hyper-hemisphere of SIL by way of example of the SIL, Table 1 shows both cases of the hyper-hemisphere of SIL and the hemisphere of SIL as well.

**Table 1**

| Numerical aperture of converging lens | Sort of SIL | Refractive index of SIL |
|---|---|---|
| NA = 0.65 | Hemisphere (r=0.5mm) | N =1.875 |
| NA = 0.35 | Hyper-hemisphere(r=0.5mm) | N =1.875 |

The specification of the objective lens shown in Table 1 is set up in such a manner that even in a case where any SIL of the hemisphere SIL and the hyper-hemisphere SIL is adopted, the numerical aperture of the objective lens is 1.22 (NA = 1.22).

Table 2 shows an example of a specification for the collimate lens 21, the first conversion lens 22 and the second conversion lens 23.

**Table 2**

| | Focal length f(mm) | Flux diameter Φ(mm) |
|---|---|---|
| Collimating lens | 10 | 2.8 |
| 1st conversion lens | 6 | 2.8 |
| 2nd conversion lens | 6 | 2.8 - 4.0 |

Hereinafter, there will be described a wave aberration corrected by a movement of the first conversion lens 22 in the optical direction on the basis of the specifications shown in Tables 1 and 2.

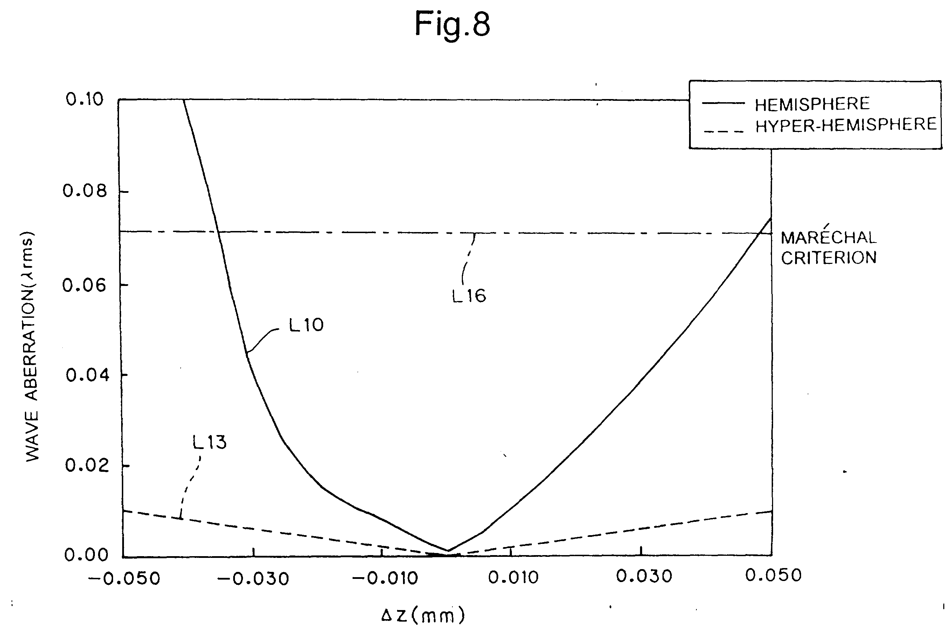

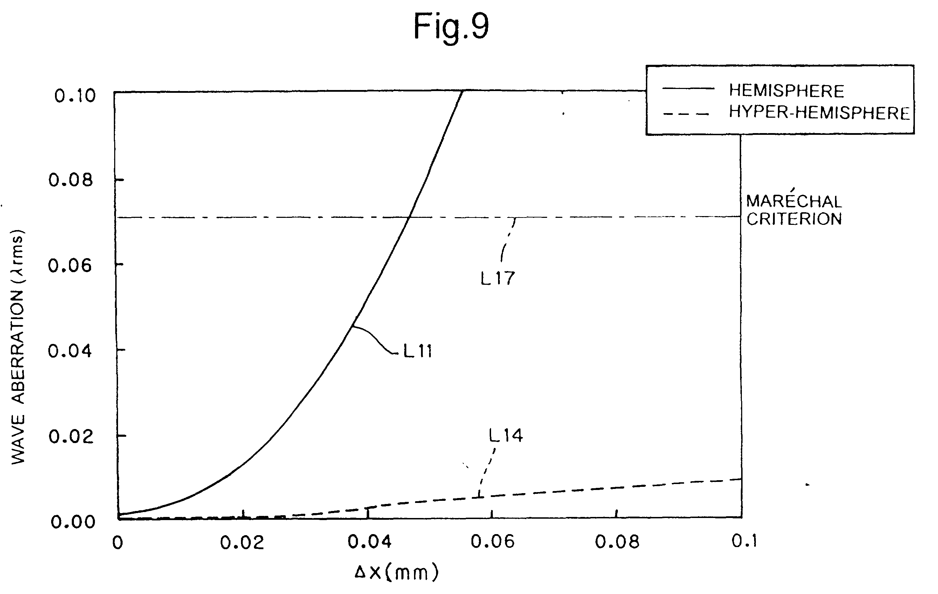

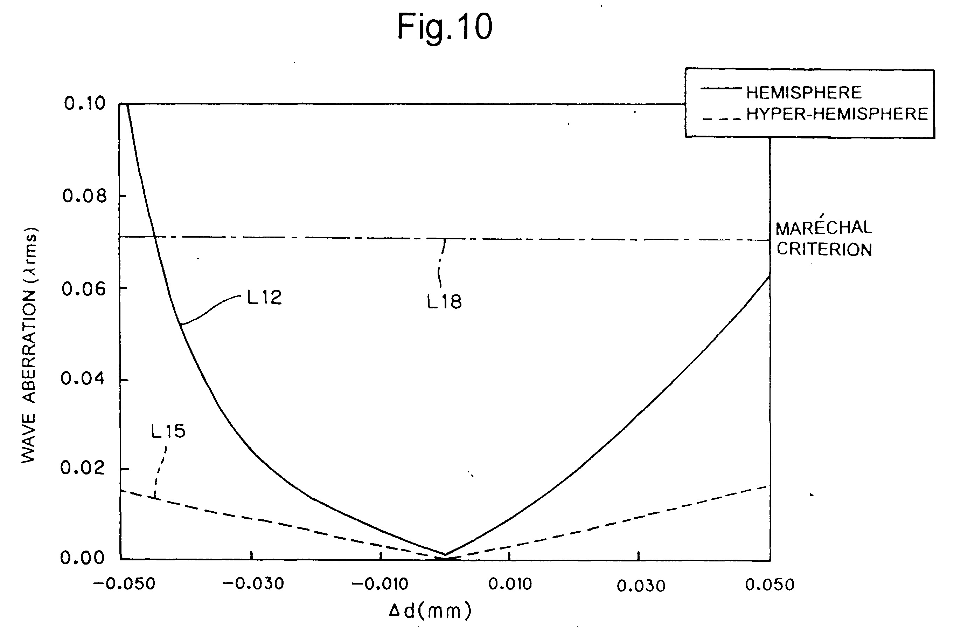

Fig. 8 is a graph showing a result corrected in a wave aberration due to an arrangement misregistration ΔZ in an optical axis direction. Fig. 9 is a graph showing a result corrected in a wave aberration due to an arrangement misregistration ΔX within an X-Y plane. Fig. 10 is a graph showing a result corrected in a wave aberration due to a thickness error Δd.

The vertical axes and the horizontal axes of Figs. 8, 9 and 10 correspond to those of Figs. 4, 5 and 6, respectively, but in some cases, scales of the vertical axis and the horizontal axis are different from those of Figs. 4, 5 and 6. In a similar fashion to that of Figs. 4, 5 and 6, in Figs. 8, 9 and 10, graphs involved in a case where the objective lens including the hemisphere of SIL is used are shown with linear lines L10, L11 and L12. And graphs involved in a case where the objective lens including the hyper-hemisphere of SIL is used are shown with broken lines L13, L14 and L15. Further, in Figs. 8, 9 and 10, Maréchal criterion is shown with dashed lines L16, L17 and L18.

First, in comparison of Fig. 8 with Fig. 4, it would be understood that an amount of wave aberration due to the misregistration ΔZ in the optical axis, as shown in Fig. 8, is greatly reduced in accordance with the above-mentioned correction, even if any of the hyper-hemisphere of SIL and the hemisphere of SIL is used. Thus, as compared with the case of no correction shown in Fig. 4, it is possible to greatly improve the wave aberration.

Next, with respect to the wave aberration caused by the misregistration ΔX within the plane, in comparison of Fig. 9 with Fig. 5, it would be understood that the wave aberration is improved in accordance with the above-mentioned correction. It would be noticed, however, that in a case where the hemisphere of SIL is used, the suppression effect for the wave aberration by the correction is little. In other words, the suppression effect for the wave aberration by the correction is remarkable particularly in the event that the hyper-hemisphere of SIL is used.

Further, with respect to the wave aberration caused by the thickness error Δd, in comparison of Fig. 10 with Fig. 6, it would be understood that the wave aberration is improved in accordance with the above-mentioned correction. In case of the use of the hyper-hemisphere of SIL, the wave aberration is remarkably below Maréchal criterion throughout the graph of Fig. 10. And even in case of the use of the hemisphere of SIL, the wave aberration is below Maréchal criterion approximately throughout the graph of Fig. 10.

Thus, the arrangement of the optical system according to the present invention makes it possible to correct the wave aberration caused by the arrangement error of the objective lens including the SIL and the processing error of the lens. In a similar fashion, also in a case where the actuator 30 shown Fig. 7 is used to move the second conversion lens 23, as mentioned above, it is possible to expect the effects shown in Figs, 8, 9 and 10. According to the above-mentioned explanation, it is assumed that only a single type of error of the arrangement errors and the like occurs. However, also in the event that a plurality of types of errors simultaneously occur, it is possible to expect that the wave aberration is completely suppressed in accordance with the above-mentioned correction. Further, it is possible to expect a suppression of the wave aberration due to the wavelength variation of the light source.

The slider 60 shown in Fig. 7 is fixed on a swing arm 80. The semiconductor laser 10 and the collimator 20 are also disposed on the swing arm 80. The swing arm 80 is an example of the slider movement unit referred to in the present invention.

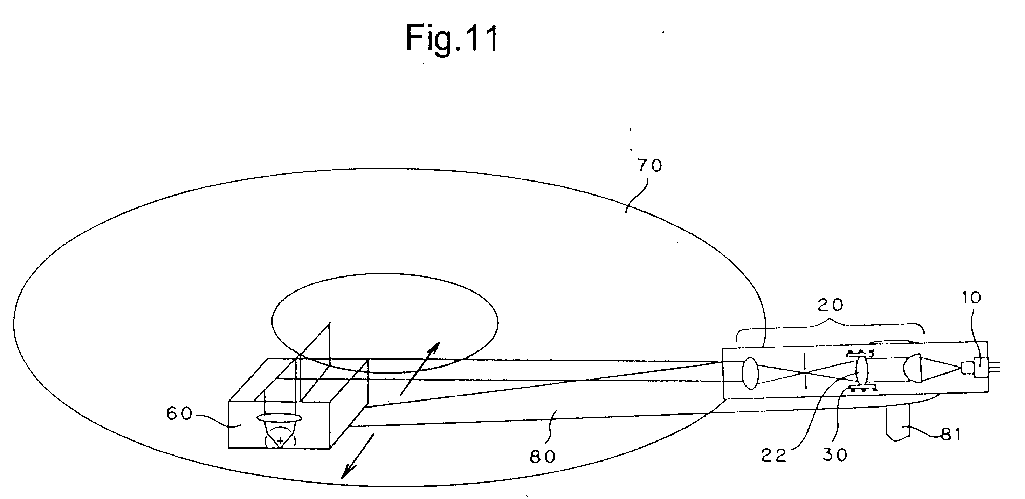

Fig. 11 is a perspective view of a collimator 20, etc. disposed on the swing arm 80.

The slider 60 is fixed on the tip of the swing arm 80. The semiconductor laser 10 and the collimator 20 are disposed near a rotary shaft 81 of the swing arm 80. This arrangement permits the tip of the swing arm 80 to be light so that a seek operation is performed promptly and reliably. Further, when the slider 60, etc. are fixed on the swing arm 80, an interval between the slider 60 and the collimator 20 is always constant. Thus, once an adjustment of the collimator 20 to suppress the wave aberration may avoid a necessity for readjustment at the time of the seek operation.

Fig. 11 shows a disk type of storage medium 70 which is driven by a motor. The storage medium 70 is concentrically provided with a track for storing information. When the swing arm 80 rotates on the rotary shaft 81, there is performed the seek operation wherein the slider 60 moves to a desired track position on the storage medium 70. Further, as mentioned above, when the first conversion lens 22 is moved in a direction perpendicular to the optical axis by the actuator 30, an irradiation light spot position on the storage medium 70 is controlled in movement so that the irradiation light spot position is brought onto the track, that is, a so-called tracking operation is performed.

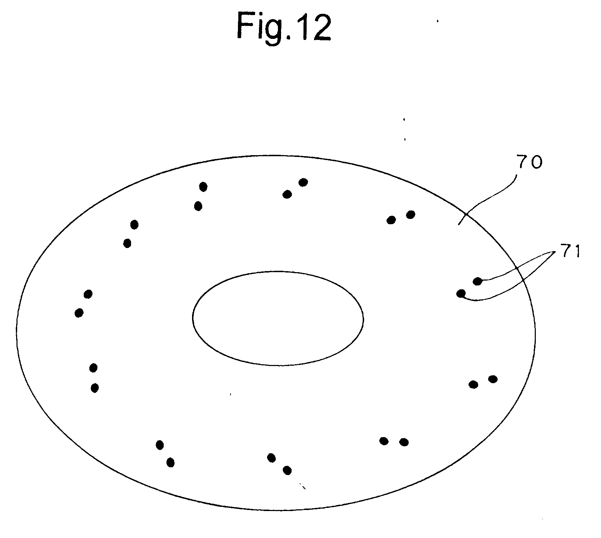

Fig. 12 is an illustration showing an example of a track formed on a storage medium.

With respect to the configuration of a track formed on a storage medium, there are considered a concentric circle, a spiral and a reciprocal spiral. Fig. 12 exemplarily shows a storage medium 70 in which a track is concentrically formed. Generally, as a mark for a tracking operation and a seek operation, there are formed on a storage medium emboss pits and continuous guide grooves. As a way of tracking, there are known a push-pull scheme in which a diffraction of detected light from guide grooves formed on a storage medium beforehand is utilized, and a 3-beam scheme in which an irradiation light is separated into three beams of light to be detected. Fig. 12 shows the storage medium 70 in which as an example of the above-mentioned mark, a stagger-like configuration of emboss pits 71 are put. Information is stored between a pair of emboss pits 71. Here, there is performed a so-called sample servo system of tracking in which those emboss pits 71 are used. Such a sample servo system of tracking has an advantage that a detection according to the optical near field is permissive even during a seeking process in which a recording track is crossed, as compared with a tracking in which a storage medium having continuous groups is dealt with. Consequently, the sample servo system is a tracking means effective for an optical information memory apparatus using an SIL, and particularly effective for a rewritable optical magnetic disk and a case where a phase change recording is used. According to the present embodiment, the rewritable optical magnetic disk is used.

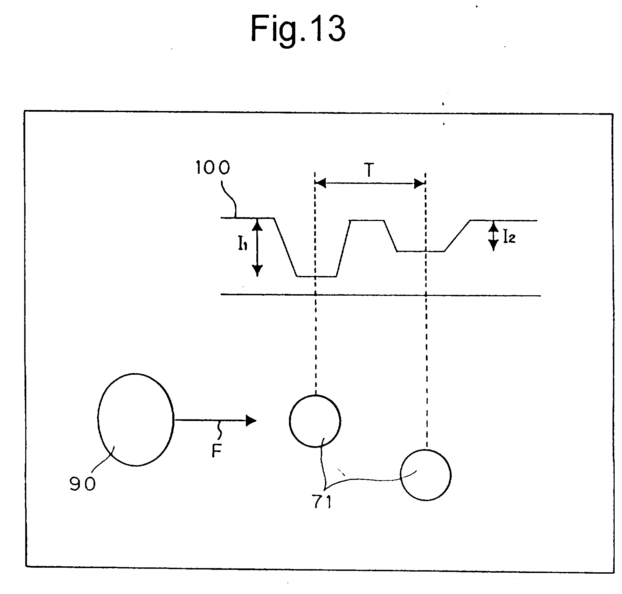

Fig. 13 is an explanatory view useful for understanding a tracking of a sample servo system.

Fig. 13 shows two of the stagger-like configuration of emboss pits 71 shown in Fig. 12. As mentioned above, information is stored between two stagger-like configuration of emboss pits 71. Fig. 13 also shows a condensed spot 90 irradiated onto a storage medium. The condensed spot 90 moves in the right direction with respect to the figure as shown by an arrow F in Fig. 13, when the storage medium rotates, and sequentially passes through two emboss pits 71.

Light condensed into the condensed spot 90 is reflected by the storage medium and detected. An intensity of a detected signal is modulated when the condensed spot 90 passes through the emboss pits 71. Fig. 13 also shows a graph 100 showing changes with time of the intensity of the detected signal. In the graph 100, there appears two times of intensity modulation at an interval T of time associated with a difference between forming positions of two emboss pits 71 formed as a stagger-like mark. Modulated intensities I₁ and I₂ of two times of intensity modulation are sampled. A tracking error signal representative of a misregistration of the condensed spot 90 with respect to the track is detected in accordance with a differential signal of the modulated intensities I₁ and I₂. The tracking is performed in such a manner that a movement control of a spot position of an irradiation light is performed in accordance with the tracking error signal.

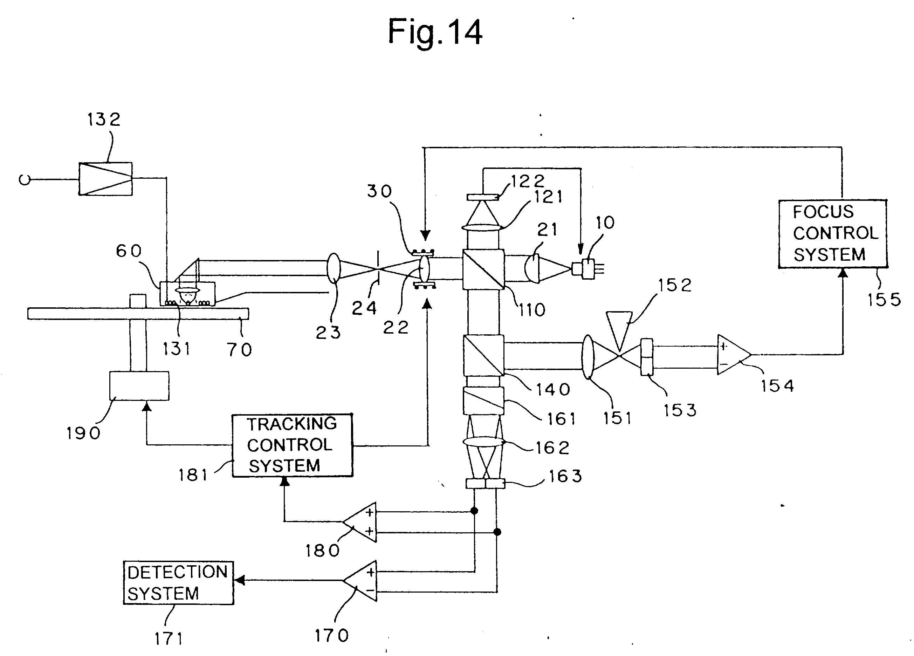

Fig. 14 is a construction view of a focus control system and a tracking control system according to the first embodiment of the present invention.

Light, which is emitted from the semiconductor laser 10 and is formed by the collimating lens 21 into a parallel luminous flux, is separated by a polarization beam splitter 110 to a transmission light and a reflection light. The reflection light is condensed on a photo detector 122 by a condensing lens 121, and is used for a light quantity monitor and an automatic power control.

The transmission light from the polarization beam splitter 110 is condensed in the form of an irradiation light through the first conversion lens 22, the aperture 24 and the second conversion lens 23 on the storage medium 70 by an objective lens fixed on a slider 60.

The slider 60 is provided with a magnetic field coil 131 by which a magnetic field is applied to the storage medium 70. When a modulation signal is fed from a magnetic field modulation driving apparatus 132 to the magnetic field coil 131, a modulated magnetic field is generated. Information is recorded on the storage medium 70 through irradiation of light while the modulated magnetic field is applied. In the even that information is read from the storage medium 70, the magnetic field is not applied.

Light reflected from the storage medium 70 reaches again the polarization beam splitter 110 and reflected, and then split by a beam splitter 140 to a transmission light and a reflection light.

Light reflected by the beam splitter 140 is used for detection of a focussing error signal. As a detection method of the focussing error signal, there may be considered several ways such as a knife edge method, a an astigmatism method, a spot size detection method, and a critical angle method. In the present invention, while it is acceptable that any of these methods is adopted, the embodiment shown in Fig. 14 shows the knife edge method by way of example. According to the present embodiment, light reflected by the beam splitter 140 reaches a two-division photo detector 153 via a lens 151 and a knife edge 152. A signal derived from the two-dividing photo detector 153 is detected by a differential amplifier 154 to generate a focussing error signal. In other words, the differential amplifier 154 is an example of the focussing error detection unit referred to in the present invention. The focussing error signal is fed to a focus control system 155, and a feedback signal is fed to the actuator 30. The first conversion lens 22 is moved in a direction parallel to the optical axis in accordance with the feedback signal. As a result, a diameter of the irradiation spot on the storage medium 70 is controlled to provide a focus on the storage medium 70. As mentioned above, according to the first embodiment, the wave aberration caused by arrangement error and processing error for an SIL is corrected by a movement of a position of the first conversion lens 22, and in addition an interval between the SIL and the storage medium 70 is controlled by the slider 60 in the order of nanometer. Thus, there is no need to provide a focussing control after the optical system is regulated once. However, for example, in case of a separation optical system variable in length of an optical path in which the slider 60 is separately moved to implement a high speed seek for information, the focussing control using the feedback signal is particularly effective.

Light transmitted through the beam splitter 140, which is used for a tracking control and a signal detection, is separated in a polarization component by Wollaston prism 161 and reaches a two-division photo detector 163 via a lens 162. Signals generated from the two-division photo detector 163 is detected by a differential amplifier 170 in the form of an optical magnetic signal and is fed to a detection system 171.

The signals generated from the two-division photo detector 163 are added together by an adder amplifier 180 and then fed to a tracking control system 181 in the form of a sample servo signal subjected to the intensity modulation by the emboss pits. The tracking control system 181 detects, as described in conjunction with Fig. 13, a tracking error signal by the sample servo. A feedback signal based on the tracking error signal is fed to the actuator 30. Consequently, the tracking control system 181 serves as both the tracking error detection unit and the tracking control unit referred to in the present invention. The actuator 30 causes the first conversion lens 22 to move in a direction perpendicular to the optical axis in accordance with the feedback signal, thereby performing a tracking.

Referring to Fig. 12, the stagger-like configuration of emboss pits 71 are provided at even intervals, and a self-clock is prepared from the sample servo signal. A rotary speed of a spindle motor 190 for driving the storage medium 70 is controlled to be a constant speed.

According to the above-mentioned arrangement, the use of a high numerical aperture of objective lens using an SIL makes it possible to perform recording and reproducing for a storage medium at high density.

Next, there will be described alternative embodiments different from the first embodiment. With respect to the alternative embodiments, only different points from the first embodiment are described and redundant description will be omitted.

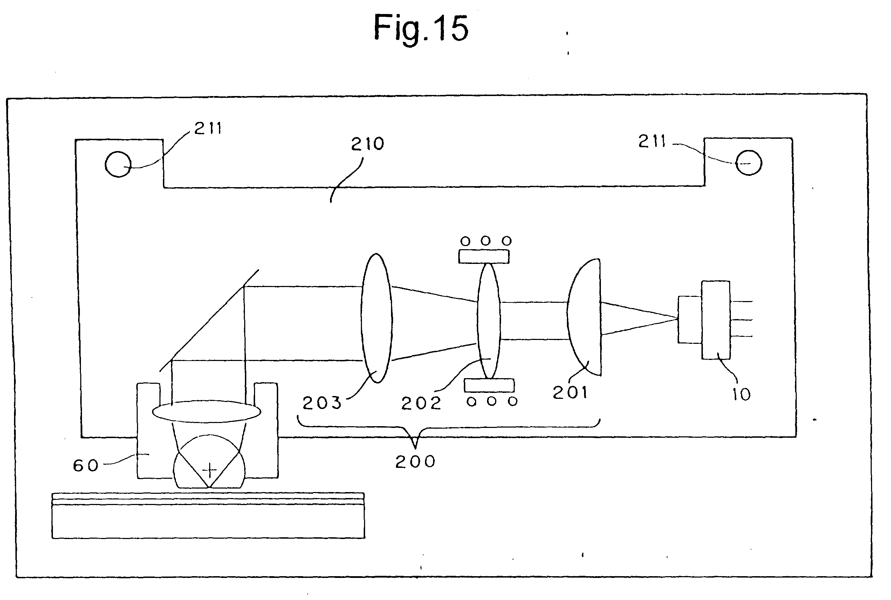

Fig. 15 is a view showing the second embodiment of the present invention.

The second embodiment is different from the first embodiment in an arrangement of the collimator and the slider movement unit referred to in the present invention.

A collimator 200 comprises: a collimating lens 201 for collimating divergent pencil of rays emitted from the semiconductor laser 10 into a parallel luminous flux; a first conversion lens 202 for converting the parallel luminous flux formed through collimating by the collimating lens 201 to divergent pencil of rays; a second conversion lens 203 for reversing divergent pencil of rays, which are converted by the first conversion lens 202, to a parallel luminous flux. An arrangement of the first conversion lens 202 and the second conversion lens 203 is an arrangement of a so-called Galilean telescope. Also in the second embodiment, the parallelism of the parallel luminous flux formed by the collimator 200 may be regulated by means of controlling a position of the first conversion lens 202 or the second conversion lens 203 in the direction parallel to the optical axis by the actuator 30, so that a wave aberration caused by an error in mounting of the SIL and/or an error in processing of the SIL is suppressed. Further, also in the event that the first conversion lens 202 converts the parallel luminous flux to the converged luminous flux, and the second conversion lens 203 reverses the converted luminous flux to the parallel luminous flux before the converted luminous flux focuses, it is possible to expect the same effect as to the suppression of the wave aberration.

According to the second embodiment, there is provided a slider movement unit 210 on which the slider 60 and the collimator 200 are fixed. The slider movement unit 210 moves along two rails 211 extending in a depth direction with respect to the figure. Even if such a slider movement unit 210 is concerned, an interval between the slider 60 and the collimator 200 is kept constant. Thus, it is possible to expect a reliable correction effect for the wave aberration.

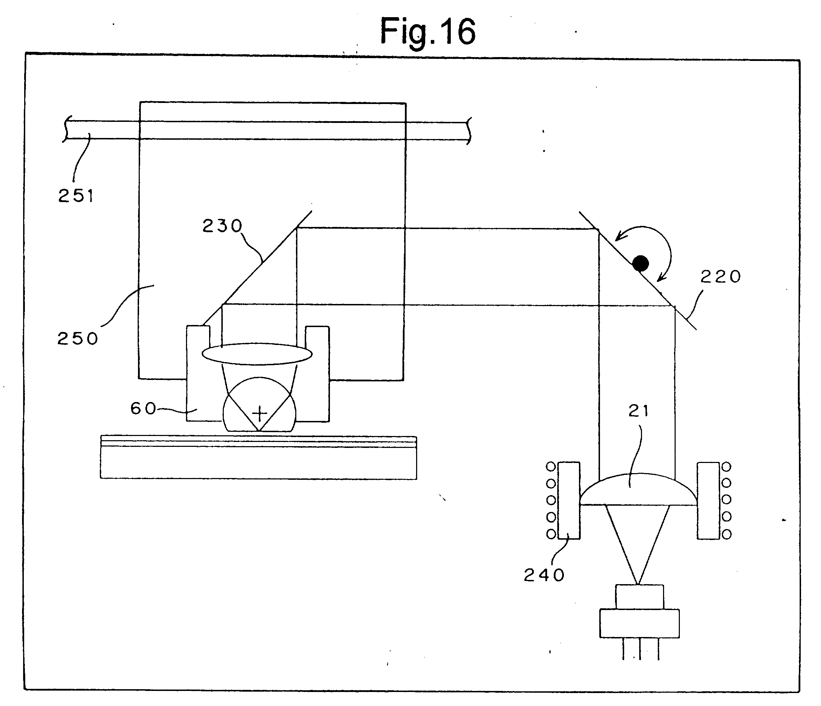

Fig. 16 is a view showing the third embodiment of the present invention.

According to the first embodiment, apposition of an irradiation light spot on a storage medium is controlled by a movement of the first conversion lens. On the contrary, according to the third embodiment, a position of a spot is controlled by a galvanomirror 220. The galvanomirror 220 is an example of the traveling direction control mechanism referred to in the present invention. The collimator referred to in the present invention comprises the collimating lens 21 and the galvanomirror 220. With an arrangement in which a mirror 230 serves as the galvanomirror 220, a position of a spot can be controlled. In case of such an arrangement, the collimator referred to in the present invention comprises the collimating lens 21, the mirror 220 and the mirror 230.

According to the third embodiment, there is provided an actuator 240 for moving the collimating lens 21 in the direction parallel to the optical axis. The actuator 240 is an example of the parallelism control mechanism. The use of the parallelism control mechanism is effective for a compactness of the apparatus.

Further, according to the third embodiment, there is provided a slider movement unit 250 for moving the slider 60 independently. The slider movement unit 250 moves along a rail 251 extending in the horizontal direction with respect to the figure, thereby moving the slider 60. In this manner, moving the slider 60 independently makes it possible to perform the seek operation at high speed.

Next, there will be explained the fourth embodiment of the present invention.

According to the above-mentioned respective embodiments, there are shown an example in which an objective lens using the hemisphere lens or the hyper-hemisphere lens as the SIL is adopted in the form of the condensing unit referred to in the present invention. On the contrary, according to the fourth embodiment, the objective lens is replaced by a reflection type of SIL (or SIM: Solid Immersion Mirror).

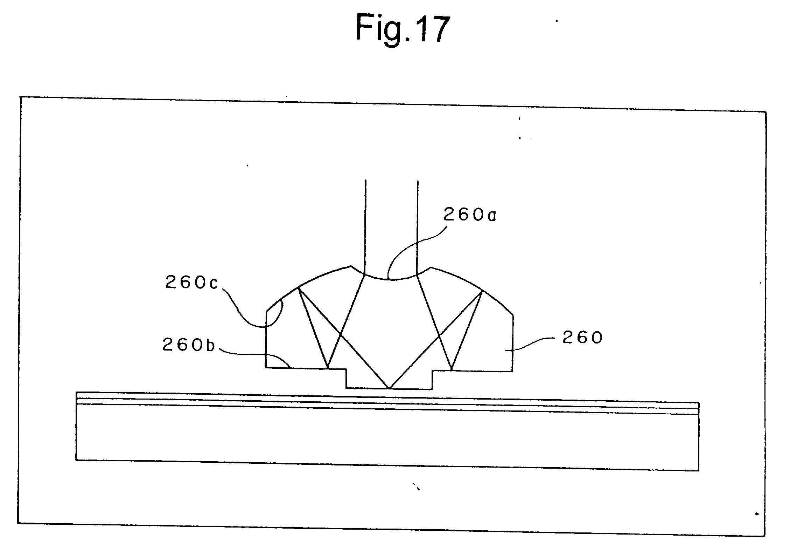

Fig. 17 is an view showing an example of a reflection type of SIL.

In a reflection type of SIL 260, an arrangement error is associated with only falling of lens, but the existence of a transmission surface 260a and reflection surfaces 260b and 260c involves problems as to processing errors and thickness errors for those surfaces 260a, 260b and 260c. Also in the event that such a reflection type of SIL 260 is adopted, the correction of the wave aberration is effective in a similar fashion to that of the above-mentioned respective embodiments.

As mentioned above, according to an optical information memory apparatus of the present invention, it is possible to readily correct a wave aberration caused by an error in thickness of an SIL and/or an error in mounting of the SIL. Thus, in a high NA of objective lens including the SIL, it is possible to suppress a wave aberration and implement a microscopic spot on a storage medium. Further, according to an optical information memory apparatus of the present invention, it is possible to implement a recording involved in high density of information and a reproduction of information involved in high density of recording.

And, according to an optical head of the present invention, it is possible to readily correct the wave aberration as mentioned above, and thus it is possible to suppress a wave aberration and implement a microscopic spot on a storage medium.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. An optical information memory apparatus wherein light is applied to a predetermined storage medium (2) so that an access of information to the storage medium (2) is performed, said optical information memory apparatus comprising:
a light source (10) for emitting a light beam;
a transmission unit for transmitting the light beam emitted from said light source (10);
a condensing unit for condensing the light beam transmitted by said transmission unit to focus on the storage medium (2); and
a divergence and convergence degree control mechanism for controlling said transmission unit to control a degree of divergence and convergence of the light beam transmitted by said transmission unit.

2. An optical information memory apparatus according to claim 1, wherein said transmission unit includes a collimator (20) for collimating the light beam emitted from said light source (10) to form a parallel luminous flux (1a), and said divergence and convergence degree control mechanism is a parallelism control mechanism for controlling said collimator (20) to control a parallelism of the parallel luminous flux (1a) formed by said collimator (20).

3. An optical information memory apparatus according to claim 2, wherein said collimator (20) comprises a plurality of lenses (21, 22, 23) through which the light beam emitted from said light source (10) sequentially pass, and said parallelism control mechanism moves anyone of the plurality of lenses (21, 22, 23) in parallel with respect to an optical axis.

4. An optical information memory apparatus according to claim 2, wherein said collimator (20) comprises a collimating unit for collimating the light beam emitted from said light source (10) to temporarily form a parallel luminous flux; a first conversion lens (22) for converting the parallel luminous flux temporarily formed by said collimating unit to divergent pencil of rays or converged luminous flux; and a second conversion lens (23) for reversing the divergent pencil of rays or the converged luminous flux, which are converted by said first conversion lens (22) from the parallel luminous flux, to the parallel luminous flux (1a), and
said parallelism control mechanism moves anyone of said first conversion lens (22) and said second conversion lens (23) in parallel with respect to an optical axis.

5. An optical information memory apparatus according to claim 2, wherein said light source (10) emits divergent light, said collimator (20) is a collimating lens (21) for collimating the divergent light emitted from said light source (10), and said parallelism control mechanism moves said collimating lens (21) in parallel with respect to an optical axis.

6. An optical information memory apparatus according to claim 2, wherein said optical information memory apparatus further comprises a traveling direction control mechanism for controlling said collimator (20) to control a traveling direction of the parallel luminous flux formed by said collimator (20) .

7. An optical information memory apparatus according to claim 6, wherein said collimator (20) comprises a plurality of lenses (21, 22, 23) through which the light beam emitted from said light source (10) sequentially pass, and said traveling direction control mechanism moves anyone of the plurality of lenses (21, 22, 23) vertically with respect to an optical axis.

8. An optical information memory apparatus according to claim 6, wherein said collimator (20) comprises a collimating unit for collimating the light beam emitted from said light source (10) to temporarily form a parallel luminous flux (1a); a first conversion lens (22) for converting the parallel luminous flux temporarily formed by said collimating unit to divergent pencil of rays or converged luminous flux; and a second conversion lens (23) for reversing the divergent pencil of rays or the converged luminous flux, which are converted by said first conversion lens (22) from the parallel luminous flux, to the parallel luminous flux, and
said traveling direction control mechanism moves anyone of said first conversion lens (22) and said second conversion lens (23) vertically with respect to an optical axis.

9. An optical information memory apparatus according to claim 3, wherein said collimator (20) has a reflection member (220) for reflecting a parallel luminous flux on a plane, and said traveling direction control mechanism rotates said reflection member (220) so that a direction of reflection of the parallel luminous flux is varied.

10. An optical information memory apparatus according to claim 2, wherein said condensing unit includes a solid immersion lens (52).

11. An optical information memory apparatus according to claim 2, wherein said condensing unit includes a solid immersion lens (52) having a hyper-hemisphere.

12. An optical information memory apparatus according to claim 2, wherein said optical information memory apparatus further comprises: a focussing error detecting unit for detecting a focussing error in said condensing unit using light reflected by the storage medium (2); and a focus control unit (155) for focussing on the storage medium (2) by said condensing unit through a feedback of a detection result by said focussing error detecting unit to said parallelism control mechanism.

13. An optical information memory apparatus according to claim 2, wherein said storage medium (2) has a concentric or spiral track for storing information, said optical information memory apparatus further comprises:
a tracking error detecting unit for detecting a misregistration between a focus position of light by said condensing unit and a position of said track; and
a tracking control unit (181) for providing a coincidence between the focus position of light by said condensing unit and the position of said track through a feedback of a detection result by said tracking error detecting unit (181) to said traveling direction control mechanism.

14. An optical information memory apparatus according to claim 13, wherein said storage medium (2) is formed with emboss pits (71) along said track, and said tracking error detecting unit detects the misregistration between the focus position and the position of said track in accordance with a sample servo system.

15. An optical information memory apparatus according to claim 2, wherein said optical information memory apparatus further comprises a slider (60) on which said condensing unit is fixed, said slider moving along a surface of the storage medium (2) in a state that the slider rises above the surface of the storage medium (2) or the slider is in contact with the surface of the storage medium (2).

16. An optical information memory apparatus according to claim 15, wherein said optical information memory apparatus further comprises a slider movement unit for moving said slider (60) to a desired position of the surface of the storage medium (2) in a state that a relative position of said light source (10), said condensing unit, and an optical system for guiding light emitted from said light source (10) to said condensing unit is fixed.

17. An optical head comprising:
a light source (10) for emitting a light beam;
a transmission unit for transmitting the light beam emitted from said light source (10);
a condensing unit for condensing the light beam transmitted by said transmission unit to focus; and
a divergence and convergence degree control mechanism for controlling said transmission unit to control a degree of divergence and convergence of the light beam transmitted by said transmission unit.

18. An optical head according to claim 17,
wherein said transmission unit includes a collimator (20) for collimating the light beam emitted from said light source (10) to form a parallel luminous flux, and said divergence and convergence degree control mechanism is a parallelism control mechanism for controlling said collimator (20) to control a parallelism of the parallel luminous flux (10) formed by said collimator (20).
